# EUROPÄISCHE PATENTSCHRIFT

(11) **EP 2 145 073 B1**
(45) Veröffentlichungstag und Bekanntmachung des Hinweises auf die Patenterteilung: **13.03.2013**
(21) Anmeldenummer: 08734994.0
(22) Anmeldetag: 03.04.2008
(51) Int. Cl.: E21B 7/04, E21B 7/30, F16L 55/165, E21B 17/046

(54) **BOHRSYSTEM**
BORING SYSTEM
SYSTÈME DE FORAGE

(30) Priorität: 05.04.2007 DE 102007016823
(43) Veröffentlichungstag der Anmeldung: 20.01.2010
(73) Patentinhaber: Tracto-Technik GmbH & CO. KG, 57368 Lennestadt (DE)
(72) Erfinder: PÜTTMANN, Franz-Josef, 57368 Lennestadt (DE)
(74) Vertreter: Tilmann, Max Wilhelm
(86) Internationale Anmeldenummer: PCT/EP2008/002655
(87) Internationale Veröffentlichungsnummer: WO 2008/122403

(56) Entgegenhaltungen:
- DE-A1- 10 065 533
- DE-A1- 19 918 530
- DE-A1-102004 032 356
- DE-C2- 19 608 980

## Beschreibung

Die Erfindung betrifft System für den Betrieb von Kanalwerkzeugen, insbesondere von Aufweit- und Zugköpfen mit einem schubsteifen Gestänge, wie sie zur Sanierung von Kanälen, zum Austauschen von Rohren, aber auch zum Erstellen neuer Kanäle bekannt sind.

Beim horizontalen Austauschen von Kanalrohren werden Kanalwerkzeuge, wie Aufweitköpfe oder Zugköpfe durch den Kanal bewegt und dabei Altrohre geborsten und seitlich verdrängt oder aus dem Kanal herausgezogen. Gleichzeitig können neue Rohre in den Kanal eingezogen werden. Um die Werkzeuge mit den hierfür erforderlichen Kräften bewegen zu können sind verschiedene Systeme bekannt. So werden Werkzeuge beispielsweise an Zugseilen mit Hilfe von Winden durch den Kanal gezogen. Um eine Installation solcher Winden in der Kanalachse zu vermeiden, können diese zwar oberirdisch betrieben werden, indem das Zugseil aus der Kanalachse über eine Rolle umgeleitet wird. Winden sind aber teuer und darüber hinaus auf Aufbringen von Zugkräften beschränkt.

Größere Kräfte lassen sich über hydraulische Linearantriebe aufbringen. Auch diese können mit einem Seil betrieben werden, sind dann aber ebenfalls auf Zugkräfte beschränkt.

Für das Aufbringen von Schubkräften und hohen Zugkräften sind Linearantriebe, wie beispielsweise in der DE 196 08 980 C2 beschrieben, bekannt, die mit schubsteifen Gestängen betrieben werden. Hierzu wird der Linearantrieb in einem Schacht oder in einer Grube in der Kanalachse angeordnet.

Die einzelnen Gestängeabschnitte müssen beim Betrieb aneinandergereiht und miteinander verbunden werden. Bei längeren Bohrungen besteht das Gestänge folglich aus zahlreichen Gestängeabschnitten, die entsprechend dem Bohrfortschritt nach und nach miteinander verbunden oder voneinander getrennt werden müssen. Der einzelne Abschnitt besitzt eine begrenzte Länge und muß insbesondere dann sehr kurz sein, wenn das Bohren von einer kurzen Baugrube, beispielsweise einem Revisionsschacht, aus geschieht. Diese können Durchmesser von zum Teil unter einem Meter aufweisen. Das bedeutet, daß das Verbinden der Gestängeschüsse einen erheblichen Aufwand, insbesondere bei langen Bohrstrecken darstellt. Der Aufenthalt im Bereich des Antriebs zum Verbinden der Gestängeschüsse ist dann besonders unerwünscht, wenn er in dem beengten und oft geruchlich belasteten Revisionsschacht stattfinden muß, wie dies bei der Kanalsanierung häufig der Fall ist.

Im Stand der Technik sind Bemühungen darauf gerichtet, das Verbinden der Gestängeschüsse zu erleichtern, indem anstelle von Schraubverbindungen beispielsweise Kupplungen vorgesehen sind.

Ein solches Gestänge ist aus der DE 199 18 530 A1 bekannt. Um eine zug- und drehfeste Verbindung zwischen zwei Gestängeabschnitten zu ermöglichen, besitzen diese Kupplungen am vorderen Ende des anzukuppelnden Gestängeabschnittes einen axial vorkragenden laschenartigen Ansatz, der in das rückwärtige Ende des vorausgehenden Gestängeabschnitts gleitend eingreift.

In einem alternativen Lösungsansatz ist in der DE 196 08 980 eine Gelenkkette beschrieben, mit der sich Schub- und Zugkräfte auf ein Kanalwerkzeug aufbringen lassen, so daß ein Verbinden von Gestängeabschnitten in der Grube entfällt, und dennoch Schubkräfte aufgebracht werden können. Eine solche Kette ist allerdings teuer, anfällig und schwer zu transportieren.

Neuere Entwicklungen haben zu Gestängen geführt, bei denen das Verbinden der Gestängeabschnitte weiter erleichtert ist und selbst ein Verbinden der Gestängeabschnitte an der Erdoberfläche erlauben, ohne daß ein dauerhafter Aufenthalt in der Grube erforderlich ist. In der DE 100 65 533 A1 ist eine Kupplung beschrieben, bei der Gestängeabschnitte zusammengesteckt werden, indem korrespondierende Enden der Gestängeabschnitte durch ein Parallelverschieben der Gestängeabschnittsachsen verbunden werden. Ein erster Gestängeabschnitt weist dabei einen Zapfen auf, der in eine korrespondierende Ausnehmung eines zweiten Gestängeabschnitts eingreift. So können die Gestängeabschnitte an der Erdoberfläche bereits verbunden werden, so daß der Betrieb, wenn der Linearantrieb einmal in der Grube installiert und das Gestänge aufgebaut wurde, für einen gewissen Zeitraum von der Erdoberfläche erfolgen kann.

Davon ausgehend liegt der Erfindung die Aufgabe zugrunde, ein System für das Horizontalbohren bzw. Rohrerneuern zur Verfügung zu stellen, das es erlaubt, Gestänge von der Erdoberfläche aus zu betätigen.

Aus DE 10 2004 032 356 A1 ist ein Kanalbearbeitungsgerät bekannt, bei dem ein Berstkopf über ein Gestänge durch eine bereits verlegte Leitung im Erdreich bis zu einer Zielbaugrube gezogen wird. Die Zugkräfte werden hierbei über das Gestänge übertragen, das aus einer Vielzahl von Überschnellkupplungen miteinander verbundenen Gestängeschüssen besteht. In der Zielbaugrube wird das Gestänge - aus Platzgründen - mittels einer kurvenförmigen Führung von der Horizontalen in die Vertikale umgelenkt. Ebenfalls aus Platzgründen ist auch ein Hydraulikzylinder eines Linearantriebs, mit dem die Zugkräfte erzeugt werden, vertikal oberhalb der Baugrube ausgerichtet. Die Schub- bzw. Zugkräfte des Hydraulikzylinders werden über eine Gliederkette zu einem Kupplungselement übertragen, das die Kräfte formschlüssig auf das Gestänge überträgt. Die Übertragung der Schub- bzw. Zugkräfte von dem Linearantrieb auf das Gestänge erfolgt in der Kanalachse.

Diese Aufgabe wird gelöst durch den Gegenstand der unabhängigen Ansprüche: Vorteilhafte Weiterbildungen sind Gegenstand der abhängigen Ansprüche.

Der Erfindung liegt der Gedanke zugrunde, ein System für den Betrieb von Kanalwerkzeugen, insbesondere von Aufweit- und Zugköpfen mit einem schubsteifen Gestänge und einer Schub- oder Zugkräfte von der Achse des Antriebs in die Kanalachse umleitenden Einrichtung vorzusehen, wodurch ein oberirdischer Betrieb eines Linearantriebs mit einem schubsteifen Gestänge möglich wird.

Das System kann so ausgebildet sein, daß die Kräfte vertikal über einen Linearantrieb von der Erdoberfläche in die Kanalachse umgelenkt werden, indem schubsteife aber aufgrund ihrer Kupplung kurvengängige Gestänge über eine Führung auf einer Kurvenbahn in die Kanalachse eingebracht werden, wobei die Führung als Widerlager für die Schub- oder Zugkraft dient, die von dem Antrieb auf das Gestänge ausgeübt wird.

Die Führung kann als Rollenbahn ausgebildet sein. Vorzugsweise weist der einzelne Gestängeschuß mindestens einen Abschnitt auf, der an die Form der Führung angepaßt ist. So kann der Gestängeabschnitt beispielsweise kreisbogensegmentförmig ausgebildet sein. Der Radius des Kreisbogens kann dann dem Radius der Rollenbahn entsprechen, so daß eine optimierte Kraftverteilung auf die Führung erreicht wird. Erfindungsgemäß kann die Führung auf dem Innenradius und/oder auf dem Außenradius der Kurvenbahn des Gestänges verwirklicht sein. So lassen sich sowohl Zug- als auch Schubkräfte von der Erdoberfläche auf das in der Kanalachse befindliche Werkzeug aufbringen.

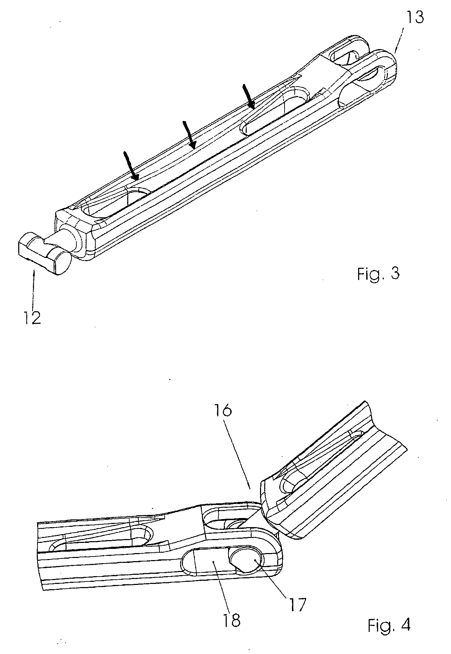

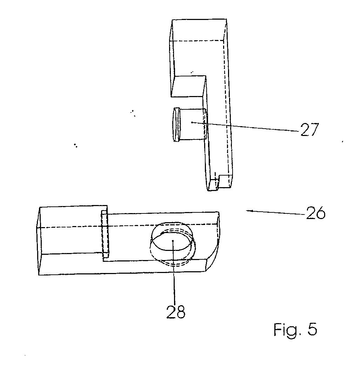

Bevorzugt wird die Erfindung mit Gestängen mit einer Kupplung gemäß Fig. 4 und 5 betrieben.

Darüber hinaus ist Verfahren zum Einbringen von Kräften in eine unterirdische Kanalachse vorgesehen, bei dem die Kräfte über ein kurvengängiges Gestänge außerhalb der Kanalachse in eine Grube eingeleitet werden und über eine Führung in die Kanalachse umgelenkt werden.

Unter "Kanal" im Sinne der vorliegenden Erfindung ist insbesondere jede Art von längserstrecktem Raum einschließlich zu erstellenden Bohrlöcher zu verstehen, wie er mit Aufweit-, Bohr- oder anderen Werkzeugen bearbeitet oder beispielsweise durch das Herausziehen von Altrohren und/oder Einziehen von Neurohren saniert wird.

Nachfolgend wird die Erfindung anhand eines in der Zeichnung dargestellten Ausführungsbeispiels des näheren erläutert.

In der Zeichnung zeigen:

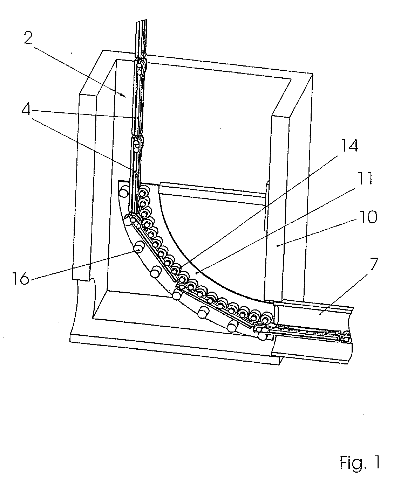

- Fig. 1: einen Schnitt durch eine Grube mit Rollenführung und Gestänge;
- Fig. 2: den Einsatz eines Zuggerätes oberhalb des Schachtes zum Einziehen eines Neurohres;
- Fig. 3: ein erfindungsgemäßer Gestängeabschnitt zum Betrieb mit einer Rollenbahn;
- Fig. 4: eine Kupplung für ein kurvengängiges Gestänge;
- Fig. 5: eine weitere Kupplung für ein kurvengängiges Gestänge.

Das erfindungsgemäße System besteht aus einem Antrieb 1 und einem Gestänge 2 mit gelenkig gekuppelten Gestängeabschnitten 4, die ein Werkzeug 6 in einem Kanal 8 bewegen. Das Werkzeug 6 ist ein Berstkopf, der ein Altrohr 7 seitlich in dem Erdreich verdrängt. Der Antrieb 1 überträgt Schub- und Zugkräfte über eine Grube 10 in die Kanalachse.

In der Grube 10 ist eine Führung 11 mit Innenrollen 14 und Außenrollen 16 angeordnet. Das Gestänge 2 legt sich aufgrund seiner gelenkigen Kupplungen und aufgrund seiner Formgebung beim Aufbringen einer Schubkraft an Außenrollen 16 an, die eine Umleitung des Schubs in die Kanalachse 8 gewährleisten. Beim Aufbringen von Zugkräften liegt das Gestänge 2 an den Innenrollen 14 der Führung 11 an und erlaubt wiederum, daß die Zugkräfte in die Kanalachse und damit auf das Werkzeug 6 übertragen werden.

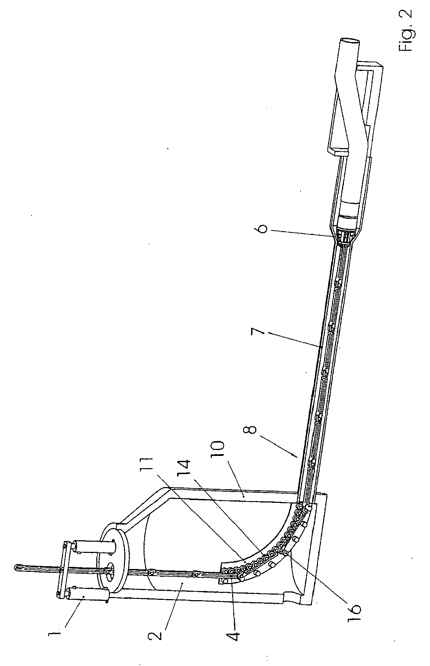

Fig.2 zeigt den erfindungsgemäßen Einsatz eines Schub-/Zuggerätes oberhalb des Schachtes. Das Gestänge wird im Schacht um 90° umgelenkt und in das Altrohr eingeschoben oder aus dem Altrohr herausgezogen.

Die Gestängeabschnitte 4 weisen zwischen den Kupplungsenden 12, 13 eine Form auf, die einem Kreisbogensegment (siehe Pfeil) entspricht (Fig. 3). Dies erlaubt es, eine gleichmäßige Abstützung der Schub- oder Zugkräfte in der Führung zu erreichen, so daß keine Spitzenbelastungen der Gestängeabschnitte und der Führung entstehen.

In den Figuren 4 und 5 sind Gestängekupplungen 16, 26 dargestellt, die eine Kurvengängigkeit des Gestänges erlauben, so daß von der Antriebsachse Kräfte in die Kanalachse umgeleitet werden können.

Die Kupplungen 16, 26 weisen einen Quersteg 17, 27 auf, der in eine Querausnehmung 18, 28 eingeschoben wird und dort über einen weiten Winkelbereich Kräfte von einem Gestängeabschnitt auf den nächsten Gestängeabschnitt übertragen kann.

Das Gestänge kann als Kreisbogensegment beidseitig, d.h. konkav/konkav oder konkav/konvex, ausgebildet sein, um die Form verschiedener Stützeinrichtungen abzubilden bzw. in verschiedenen Kurvenrichtungen betrieben zu werden.

## Patentansprüche

1. Verfahren zum Betreiben eines Kanalwerkzeugs in einem unterirdischen Kanal, **dadurch gekennzeichnet, dass** Kräfte Ober ein mit dem Kanalwerkzeug verbundenes, kurvengängiges Gestänge außerhalb der Kanalachse (8) in eine Grube (10) eingeleitet, über eine Führung (11) mittels des Gestänges in die Kanalachse (8) umgelenkt werden, und das Gestänge In den Kanal eingeschoben oder aus dem Kanal herausgezogen wird.

2. Verfahren nach Anspruch 1, **dadurch gekennzeichnet, dass** die Kräfte vertikal über einen Linearantrieb von der Erdoberfläche in die Grube (10) eingeleitet und dann mit Hilfe der Führung in die Kanalachse (8) umgelenkt werden.

3. System für den Betrieb eines Kanalwerkzeugs, insbesondere eines Aufweit- und Zugkopfs, mit einem Gestänge aus schubstelfen, gelenkig gekuppelten Gestängeschüssen, das mit dem Kanalwerkzeug verbunden ist, und mit einem Antrieb, mit dem Schub- oder Zugkräfte auf das Gestänge übertragen werden, **gekennzeichnet durch** eine kraftaufnehmende Führung (11) des Gestänges zur Umlenkung der Schub- oder Zugkräfte von der Achse des Antriebs in die Kanalachse mittels des Gestänges, wobei das Gestänge derart ausgestaltet ist, dass es in einen Kanal entlang der Kanalachse einschiebbar oder aus dem Kanal herausziehbar ist.

4. System nach Anspruch 3, **dadurch gekennzeichnet, dass** die Führung (11) als Rollenbahn ausgebildet Ist.

5. System nach Anspruch 3 oder 4, **dadurch gekennzeichnet, dass** die Gestängeschüsse mindestens einen Abschnitt aufweisen, der an die Form der Führung (11) angepasst ist.

6. System nach Anspruch 3 bis 5, **dadurch gekennzeichnet, dass** die Führung (11) eine Rollenbahn auf dem Innen- und/oder Außenradius aufweist.

7. System nach einem der vorhergehenden Ansprüche, **dadurch gekennzeichnet, dass** das Gestänge Kupplungen (16, 26) aufweist, die einen Quersteg (17, 27) aufweisen, der in eine Querausnehmung (18, 28) eingeschoben wird.

## Claims

1. Method for operating a channelling tool in an underground channel, **characterised in that** forces are introduced via a curve-running rod linkage connected with the channelling tool, in a pit (10) outside the channel axis (8), said forces are deflected into the channel axis (8) via a guide (11) by means of the rod linkage, and the rod linkage is inserted into or extracted from the channel.

2. Method according to claim 1, **characterised in that** the forces are introduced vertically into the pit (10) via a linear drive from the ground surface and then deflected into the channel axis (8) by means of the guide.

3. System for operation of a channelling tool, in particular an expansion and traction head, with a rod linkage of thrust-rigid, articulatedly coupled rod linkage sections, which rod linkage is connected with the channelling tool, and with a drive with which thrust or pulling forces can be transmitted to the rod linkage, **characterised by** a force-receiving guide (11) of the rod linkage for deflecting the thrust or pulling forces from the axis of the drive to the channel axis by means of the rod linkage, wherein the rod linkage is adapted such that it can be inserted into a channel or extracted from the channel along the channel axis.

4. System according to claim 3, **characterised in that** the guide (11) is formed as a roller track.

5. System according to claim 3 or 4, **characterised in that** the rod linkage sections have at least one segment which is adapted to the form of the guide (11).

6. System according to claims 3 to 5, **characterised in that** the guide (11) comprises a roller track on the inner and/or outer radius.

7. System according to any one of the preceding claims, **characterised in that** the rod linkage comprises couplings (16, 26) having a transverse web (17, 27) which is inserted into a transverse recess (18, 28).

## Revendications

1. Procédé d'actionnement d'un outil de maintenance de canalisations dans une canalisation souterraine, **caractérisé par le fait que** des forces sont induites dans une fosse (10) à l'extérieur de l'axe (8) de la canalisation, par l'intermédiaire d'une tringlerie apte à négocier des courbes et reliée audit outil de maintenance de canalisations, puis sont déviées jusque dans ledit axe (8) de la canalisation au moyen de ladite tringlerie, par l'intermédiaire d'un guide (11), et ladite tringlerie est insérée dans la canalisation ou extraite de ladite canalisation.

2. Procédé selon la revendication 1, **caractérisé par le fait que** les forces sont induites verticalement dans la fosse (10) à partir de la surface du sol, par l'intermédiaire d'un entraînement linéaire, et sont ensuite déviées jusque dans l'axe (8) de la canalisation, à l'aide du guide.

3. Système d'actionnement d'un outil de maintenance de canalisations, en particulier d'une tête d'évasement et de traction, comprenant une tringlerie reliée audit outil de maintenance de canalisations, composée de segments rigides à la poussée et accouplés de manière articulée, et un entraînement par lequel des forces de poussée ou de traction sont répercutées sur ladite tringlerie, **caractérisé par** un guide (11) de la tringlerie, qui absorbe les forces et est conçu pour dévier les forces de poussée ou de traction, au moyen de ladite tringlerie, jusque dans l'axe de la canalisation à partir de l'axe de l'entraînement, ladite tringlerie étant agencée de façon telle qu'elle puisse être insérée dans une canalisation le long de l'axe de ladite canalisation, ou extraite de ladite canalisation.

4. Système selon la revendication 3, **caractérisé par le fait que** le guide (11) est réalisé sous la forme d'un convoyeur à rouleaux.

5. Système selon la revendication 3 ou 4, **caractérisé par le fait que** les segments de la tringlerie comportent au moins un tronçon adapté à la forme du guide (11).

6. Système selon les revendications 3 à 5, **caractérisé par le fait que** le guide (11) présente un convoyeur à rouleaux sur le(s) rayon(s) intérieur et/ou extérieur.

7. Système selon l'une des revendications précédentes, **caractérisé par le fait que** la tringlerie est pourvue d'accouplements (16, 26) comportant une membrure transversale (17, 27) introduite dans un évidement transversal (18, 28).
